# EUROPÄISCHE PATENTSCHRIFT

(11) **EP 2 036 664 B1**
(45) Veröffentlichungstag und Bekanntmachung des Hinweises auf die Patenterteilung: **03.08.2011**
(21) Anmeldenummer: 08450134.5
(22) Anmeldetag: 11.09.2008
(51) Int. Cl.: B23Q 7/04

(54) **Bearbeitungsanlage für Werkstücke**
Treatment device for workpieces
Installation de traitement pour pièces à usiner

(30) Priorität: 13.09.2007 AT 14352007
(43) Veröffentlichungstag der Anmeldung: 18.03.2009
(73) Patentinhaber: Promot Automation GmbH, 4661 Roitham (AT)
(72) Erfinder: Gruber, Paul, 4661 Roitham (AT)
(74) Vertreter: Hübscher, Helmut

(56) Entgegenhaltungen:
- EP-A- 1 479 476
- EP-A- 1 693 145
- DE-A1- 10 348 223
- JP-A- 8 174 449

## Beschreibung

Die Erfindung bezieht sich auf eine Bearbeitungsanlage für Werkstücke mit wenigstens einer Bearbeitungsmaschine, mit einer zumindest ein Regalmagazin aufweisenden Schutzeinhausung und mit einer innerhalb der Schutzeinhausung angeordneten Ladeeinrichtung zum Be- und Entladen der Bearbeitungsmaschine, wobei die Ladeeinrichtung einen entlang einer Führung verfahrbaren Schlitten mit einem verstellbaren Ausleger umfasst, der zumindest eine Handhabungseinheit für handzuhabende Teile trägt.

Um einen automatisierten Betrieb von Werkzeugmaschinen zu ermöglichen, ist es bekannt, diesen Werkzeugmaschinen eine Ladeeinrichtung zum Be- und Entladen zuzuordnen, und zwar innerhalb einer gemeinsamen Schutzeinhausung, die mit Regalmagazinen zur Aufnahme der üblicherweise auf Paletten aufgespannten Werkstücke versehen ist. Die Förderung der aufgespannten Werkstücke und gegebenenfalls auch der für einen Werkzeugwechsel in den Regalen gelagerten Werkzeuge zwischen dem Regalmagazin und der Bearbeitungsmaschine erfolgt mit Hilfe einer entsprechenden Handhabungseinheit am Ende eines Auslegers der Ladeeinrichtung, die zur Verstellung des Auslegers einen entlang einer Bodenführung verfahrbaren Schlitten mit einer Führungssäule für einen weiteren Schlitten aufweist, in dem der Ausleger axial verschiebbar gelagert ist. Der Vorteil dieser bekannten Bearbeitungsanlagen liegt vor allem darin begründet, dass herkömmliche Werkzeugmaschinen eingesetzt werden können, weil die Ladeeinrichtung mit der Schutzeinhausung an die Werkzeugmaschine angebaut werden können, sodass aufwändige Sonderkonstruktionen entfallen. Nachteilig ist allerdings, dass der Zugang zur Maschinensteuerung, deren Eingabeeinheit sich in einem solchen Fall im Allgemeinen innerhalb der Schutzeinhausung befindet, durch die Ladeeinrichtung behindert und aus Sicherheitsgründen gesperrt wird.

Damit bei geringer Bauhöhe und geringem Konstruktionsaufwand eine automatisierte Be- und Entladung einer Bearbeitungsmaschine ermöglicht werden kann, wurde bereits eine an eine Werkzeugmaschine anschließbare Handhabungszelle vorgeschlagen (DE 103 48 223 A1), die ein entlang der Werkzeugmaschine verlaufendes Portal mit einer oberen Schlittenführung aufweist, wobei der Schlitten eine vorzugsweise nach unten vorstehende Führung für einen weiteren Schlitten trägt, an dem ein Schwenkarm mit einem Greifer zur Handhabung der Werkstücke bzw. der Werkzeuge gelagert ist. Da die Handhabungszelle, die auf der von der Werkzeugmaschine abgekehrten Seite einen Zugang aufweist, gegenüber dem Arbeitsraum der Werkzeugmaschine seitlich versetzt angeordnet ist und die Eingabeeinheit zur Maschinensteuerung außerhalb der Handhabungszelle liegt, tritt das Problem der Zugängigkeit zur Maschinensteuerung gar nicht auf, zumal die Handhabungszelle zwar durch den aus Sicherheitsgründen verschließbaren Zugang auf der von der Werkzeugmaschine abgekehrten Seite bedient, nicht aber begangen werden kann.

Um bei einer Bearbeitungsmaschine das Werkstück mit Hilfe eines Ladeschlittens platzsparend von einer Übergabeposition zu einer Ladeposition transportieren zu können, ist es darüber hinaus bekannt (DE 196 42 042 A1), den Ladeschlitten oberhalb der Bearbeitungsmaschine zu führen und mit einem gelenkig unterteilten Schwenkarm auszurüsten, dessen einen Werkstückgreifer tragender Endteil unabhängig von der Schwenkbewegung des Schwenkarmes in einer vertikalen Lage gehalten wird. Das vom Werkstückgreifer erfasste Werkstück kann somit von der Übergabeposition übernommen und durch einen Schacht der Bearbeitungsmaschine zur Ladeposition gefördert werden, wobei der Förderweg des Ladeschlittens kürzer als der des Werkstücks gewählt werden kann, weil durch die Schwenkbewegung des Schwenkarmes in Förderrichtung die Auslenkung des Schwenkarmes den Förderweg des Ladeschlittens verlängert. Da der Förderschacht nicht zugänglich ist, ist keine Rücksicht auf die Zugänglichkeit zur Bearbeitungsmaschine zu nehmen.

Schließlich ist es für die Handhabung schwerer Werkstücke bekannt (US 2005/0036879 A1), einen Portalförderer mit wenigstens zwei Schlitten vorzusehen, die nach unten ragende, schwenkbare Greifarme aufweisen, zwischen denen die handzuhabenden Werkstücke aufgenommen werden. Aufgrund der gelenkigen Unterteilung der Schwenkarme lassen sich unterschiedliche Werkstücke in unterschiedlichen Positionen ergreifen und fördern. Eine Zuordnung dieses bekannten Portalförderers zu einer Bearbeitungsmaschine ist nicht geoffenbart.

Aus der EP-1 693 145 ist eine Bearbeitungsanlage mit einer Ladeeinrichtung und einer Dachwanne zum Auffangen von herabtröpfendem Öl oder Späne im Überkopfbereich bekannt.

Der Erfindung liegt somit die Aufgabe zugrunde, eine Bearbeitungsanlage der eingangs geschilderten Art so auszugestalten, dass eine Behinderung des Zugangs zur Eingabeeinheit für die Maschinensteuerung oder zur Be- und Entladeöffnung der Bearbeitungsmaschine weitgehend vermieden werden kann, ohne die Sicherheitsanforderungen außer Acht lassen zu müssen.

Die Erfindung ist in Anspruch 1 definiert.

Die Anordnung der Schlittenführung in einem Überkopfbereich ermöglicht für die Ladeeinrichtung im Zusammenwirken mit der besonderen Ausbildung und Lagerung des Auslegers eine Grundstellung, in der ein geschützter Durchgangsbereich durch die Schutzeinhausung quer zur Schlittenführung frei gegeben werden kann. Die gelenkige Unterteilung des Auslegers in einen auf der Schlittenunterseite angelenkten Oberarm und einen daran anschließenden Unterarm, der gegen den Oberarm um eine zu dessen horizontaler Anlenkachse parallelen Achse eingeklappt werden kann, stellt dabei unter Wahrung einer ausreichenden Kopffreiheit eine geringe Bauhöhe bei einer für die Bedienung des Regalmagazins und der Bearbeitungsmaschine vorteilhaften Reichweite sicher, ohne das Überfahren des freien Durchgangsbereichs in der Grundstellung des Auslegers zu behindern und den Betrieb der Bearbeitungsmaschine zu beeinträchtigen.

Zur Absicherung des freien Durchgangs, beispielsweise zur Eingabeeinheit der Bearbeitungsmaschine für die Maschinensteuerung, weist im Bereich von quer zur Schlittenführung verlaufenden Zugangsbereichen zur Bearbeitungsmaschine die Schutzeinhausung eine im Zugangsbereich gegenüber dem Schlitten abdeckende Decke auf, sodass der Schlitten mit dem in seine Grundstellung eingeklappten Ausleger und dem vom Ausleger getragenen Handhabungsteil gefahrlos über diese Zugangsbereiche bewegt werden kann.

Damit der Handhabungsbereich der Ladeeinrichtung innerhalb der durch die Schutzeinhausung gegebenen Grenzen erweitert werden kann, kann das Anlenklager für den Ausleger der Ladeeinrichtung um eine vertikale Achse drehbar im Schlitten gelagert werden, womit beispielsweise die Bedienung auch von Magazinregalen ermöglicht wird, die quer zur Schlittenführung verlaufen.

Sind auf Paletten aufgespannte Werkstücke zu handhaben, so ist die Handhabungseinheit am Unterarmende im Allgemeinen unabhängig von der jeweiligen Winkellage des Unterarms des Auslegers horizontal auszurichten. Zu diesem Zweck kann die am Unterarm angelenkte Handhabungseinheit eine Parallelführung aus zwei miteinander antriebsverbundenen Gelenkvierecken mit dem Ober- und dem Unterarm als Lenker aufweisen, sodass die Handhabungseinheit, in diesem Fall eine Palettenaufnahme, bei jeder Verstellung des Auslegers mit Ausnahme seiner Drehung um eine vertikale Achse nur parallel zu sich verlagert wird.

Besonders vorteilhafte Verhältnisse ergeben sich mit der erfindungsgemäßen Ladeeinrichtung bei der Verkettung von zwei oder mehreren Bearbeitungsmaschinen. Wird nämlich die Ladeeinrichtung wenigstens zwei in einer gemeinsamen Schutzeinhausung vorgesehenen Bearbeitungsmaschinen zugeordnet, so kann eine der Bearbeitungsmaschinen z.B. zum Umrüsten aus dem Automatikbetrieb genommen werden, ohne alle Maschinen abstellen zu müssen, weil der Zugang zu den einzelnen Maschinen durch die frei gegebenen Zugangsbereiche während des Betriebes der jeweils anderen Maschinen offen bleiben kann.

In der Zeichnung ist der Erfindungsgegenstand in einem Ausführungsbeispiel dargestellt. Es zeigen
- Fig. 1: eine erfindungsgemäße Bearbeitungsanlage für Werkstücke ausschnitts- weise in einer schematischen Draufsicht,
- Fig. 2: diese Bearbeitungsanlage in einem Schnitt nach der Linie II-II der Fig. 1 in einem größeren Maßstab und

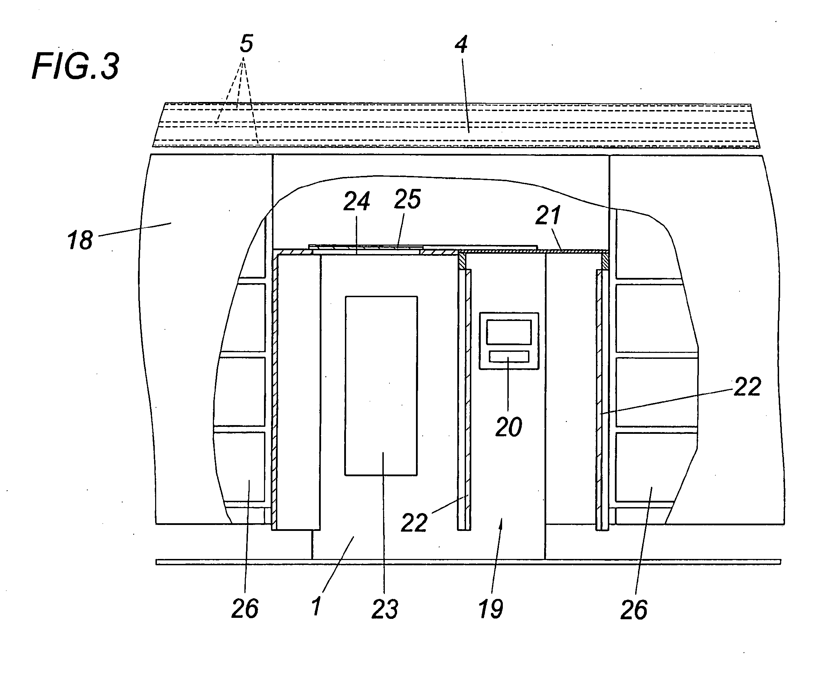

- Fig. 3: die Bearbeitungsanlage ausschnittsweise in einer zum Teil aufgerisse- nen Seitenansicht auf die Schutzeinhausung ebenfalls in einem größe- ren Maßstab.

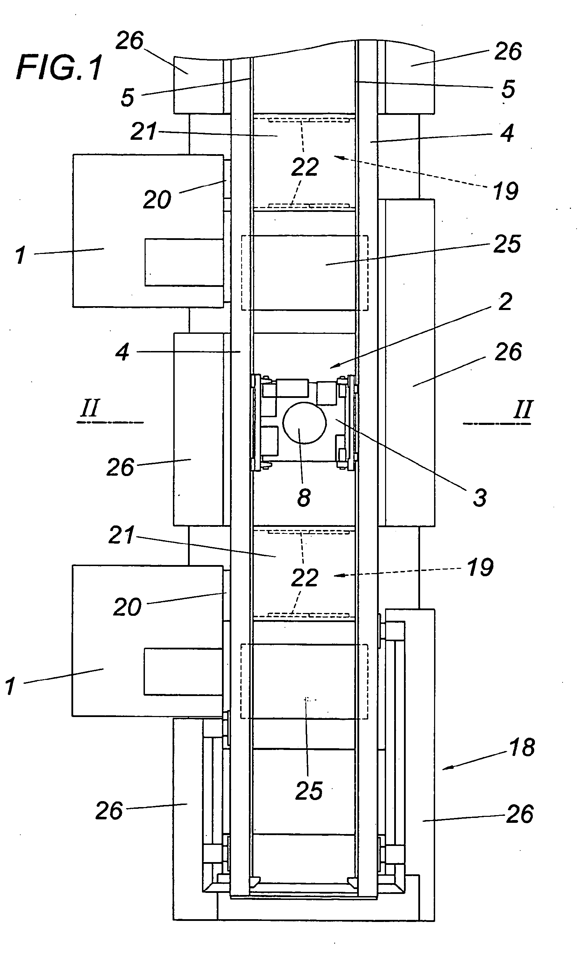

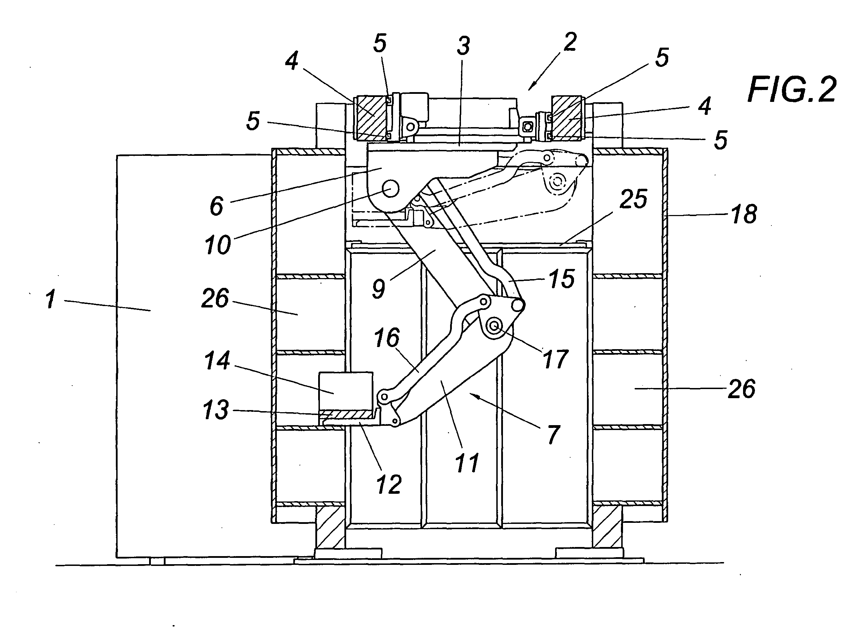

Die dargestellte Bearbeitungsanlage für Werkstücke weist mehrere verkettete Bearbeitungsmaschinen 1 auf, die mit Hilfe einer gemeinsamen Ladeeinrichtung 2 bedient werden können. Diese Ladeeinrichtung 2 umfasst einen Schlitten 3, der entlang einer Führung 4 auf Führungsschienen 5 verfahrbar ist und auf seiner Unterseite ein Anlenklager 6 für einen Ausleger 7 trägt. Dieses Anlenklager 6 ist über einen Drehkranz 8 um eine vertikale Achse drehbar gelagert, wie dies in der Fig. 1 angedeutet ist. Der Ausleger 7 selbst setzt sich aus einem Oberarm 9, der um seine horizontale Anlenkachse 10 gegen den Schlitten 3 hochschwenkbar gelagert ist, und aus einem am Oberarm 9 schwenkbar gelagerten Unterarm 11 zusammen, der an seinem vom Oberarm 9 abgekehrten Ende eine Handhabungseinheit 12, beispielsweise eine Aufnahme für Paletten 13 zum Aufspannen von Werkstücken 14, trägt, wie dies der Fig. 2 entnommen werden kann. Die Anordnung ist dabei so getroffen, dass die Handhabungseinheit 12 über zwei antriebsverbundene Gelenkvierecke 15 und 16 geführt wird, die den Oberarm 9 bzw. den Unterarm 11 als Lenker umfassen, sodass bei jeder Schwenkverstellung des Ober- bzw. des Unterarmes 9, 11 die Handhabungseinrichtung 12 in einer vorgegebenen horizontalen Winkellage verbleibt. Wird der Oberarm 9 um die Anlenkachse 10 gegen die Unterseite des Schlittens 3 hochgeschwenkt und der Unterarm 11 um seine zur Anlenkachse 10 des Oberarmes 9 parallele Lagerachse 17 gegen den Oberarm 9 in die strichpunktiert eingezeichnete Grundstellung nach der Fig. 2 eingeklappt, so ergibt sich eine entsprechende Kopffreiheit, die geschützte Zugangsbereiche innerhalb einer den Bearbeitungsmaschinen 1 und der Ladeeinrichtung 2 gemeinsamen Schutzeinhausung 18 ermöglicht.

Aufgrund der in der Grundstellung des Auslegers 7 gewonnenen Kopffreiheit lassen sich innerhalb der Schutzeinhausung 18 quer zur Schlittenführung 4 verlaufende Durchgänge 19 zu den Bearbeitungsmaschinen 1 begrenzen, um beispielsweise die Eingabeeinheiten 20 für die Maschinensteuerung bedienen zu können, ohne die Werkstückbearbeitung unterbrechen zu müssen. Diese Durchgänge 19 werden vorzugsweise nach oben gegenüber der Schlittenbahn durch eine Decke 21 sowie seitliche Türen 22 abgesichert. Damit die einzelnen Bearbeitungsmaschinen 1 bei geöffnetem Durchgang 19 be- und entladen werden können, muss die Be- und Entladeöffnung 23 der Bearbeitungsmaschine 1 für die Ladeeinrichtung 2 zugänglich sein. Diese Zugangsmöglichkeit soll jedoch bei erlaubtem Zutritt zur Be- und Entladeöffnung der Bearbeitungsmaschine gesperrt werden. Aus diesem Grunde ist der über eine der seitlichen Türen 22 zugängliche Raum vor der Be- und Entladeöffnung 23 der Bearbeitungsmaschine 1 nach oben abgedeckt und mit einer Durchgangsöffnung 24 versehen, die mit Hilfe eines Verschlussschiebers 25 geöffnet werden kann. Mit dieser Maßnahme wird bei einer voneinander abhängigen Steuerung der Türen 22 und der Verschlussschieber 25 ein gefahrloser Zugang zur Be- und Entladeöffnung der Bearbeitungsmaschine 1 sichergestellt, ohne die Bedienung der anderen Bearbeitungsmaschinen 1 durch die Ladeeinrichtung 2 zu gefährden.

Der Vollständigkeit halber ist zu erwähnen, dass die Schutzeinhausung 18 Regalmagazine 26 aufnimmt, die zur Lagerung der auf Paletten 13 aufgespannten Werkstücke vor und nach ihrer jeweiligen Bearbeitung bzw. zur Aufnahme von Werkzeugen dienen, die für einen allfälligen Werkzeugwechsel benötigt werden. Diese Regalmagazine 26 sind von den geschützten Durchgängen 19 aus erreichbar, und zwar durch die angrenzenden Türen 22.

## Patentansprüche

1. Bearbeitungsanlage für Werkstücke (14) mit wenigstens einer Bearbeitungsmaschine (1), mit einer zumindest ein Regalmagazin (26) aufweisenden Schutzeinhausung (18) und mit einer innerhalb der Schutzeinhausung (18) angeordneten Ladeeinrichtung (2) zum Be- und Entladen der Bearbeitungsmaschine (1), wobei die Ladeeinrichtung (2) einen entlang einer Führung (4) verfahrbaren Schlitten (3) mit einem verstellbaren Ausleger (7) umfasst, der zumindest eine Handhabungseinheit (12) für handzuhabende Teile trägt, wobei die Führung (4) für den Schlitten (3) in einem Überkopf- bereich vorgesehen ist, **dadurch gekennzeichnet, dass** sich der auf der Schlittenunterseite angelenkte Ausleger (7) der Ladeeinrichtung (2) aus einem gegen die Schlittenunterseite hochschwenkbaren Oberarm (9) und einem am Oberarm (9) schwenkbar gelagerten, gegen den Oberarm (9) einklappbaren Unterarm (11) zusammensetzt und dass im Bereich von quer zur Schlittenführung (4) verlaufenden Zugangsbereichen zur Bearbeitungsmaschine (1) die Schutzeinhausung (18) eine den Zugangsbereich gegenüber dem Schlitten (3) abdeckende Decke (21) aufweist.

2. Bearbeitungsanlage nach Anspruch 1, **dadurch gekennzeichnet, dass** das Anlenklager (6) für den Ausleger (7) der Ladeeinrichtung (2) um eine vertikale Achse drehbar im Schlitten (3) gelagert ist.

3. Bearbeitungsanlage nach Anspruch 1 oder 2, **dadurch gekennzeichnet, dass** die am Unterarm (11) angelenkte Nandhabungseinheit (12) eine Parallelführung aus zwei miteinander antriebsverbundenen Gelenkvierecken (15, 16) mit dem Ober- und dem Unterarm (9, 11) als Lenker aufweist.

4. Bearbeitungsanlage nach einem der Ansprüche 1 bis 3, **dadurch gekennzeichnet, dass** die Ladeeinrichtung (2) wenigstens zwei in einer gemeinsamen Schutzeinhausung (18) vorgesehenen Bearbeitungsmaschinen (1) zugeordnet ist.

## Claims

1. Treatment installation for workpieces (14) having at least one treatment machine (1), having a protective housing (18) which comprises at least one storage rack (26), and having a loading device (2), which is disposed inside the protective housing (18), for loading and unloading the treatment machine (1), wherein the loading device (2) comprises a carriage (3) which is movable along a guide (4) and has an adjustable extension arm (7) which supports at least one handling unit (12) for parts to be handled, wherein the guide (4) for the carriage (3) is provided in an overhead region, **characterised in that** the extension arm (7), which is articulated on the carriage underside, of the loading device (2) is composed of an upper arm (9), which can be pivoted upwards against the carriage underside, and a lower arm (11) which is pivotally mounted on the upper arm (9) and can be folded up against the upper arm (9), and that in the region of access regions to the treatment machine (1) which extend transversely to the carriage guide (4), the protective housing (18) comprises a ceiling (21) which covers the access region from the carriage (3).

2. Treatment installation as claimed in claim 1, **characterised in that** the articulation bearing (6) for the extension arm (7) of the loading device (2) is mounted in the carriage (3) so as to be rotatable about a vertical axis.

3. Treatment installation as claimed in claim 1 or 2, **characterised in that** the handling unit (12) which is articulated to the lower arm (11) comprises a parallel guide consisting of two mutually drivingly connected articulation quadrangles (15, 16) with the upper and lower arms (9, 11) as control levers.

4. Treatment installation as claimed in any one of claims 1 to 3, **characterised in that** the loading device (2) is allocated to at least two treatment machines (1) which are provided in a common protective housing (18).

## Revendications

1. Installation de traitement pour pièces à usiner (14) avec au moins une machine de traitement (1), avec une enceinte de protection (18) présentant au moins un magasin à rayonnages (26) et avec un dispositif de chargement (2) disposé au sein de l'enceinte de protection (18) pour charger et décharger la machine de traitement (1), le dispositif de chargement (2) comprenant un chariot (3) mobile le long d'un guide (4), avec un bras (7) réglable qui porte au moins une unité de manipulation (12) pour des pièces à manipuler, le guide (4) pour le chariot (3) étant prévu dans une zone en plafond, **caractérisée en ce que** le bras (7), articulé sur la partie inférieure du chariot, du dispositif de chargement (2) est composé d'un bras supérieur (9) relevable contre la partie inférieure du chariot, et d'un bras inférieur (11) repliable contre le bras supérieur (9) et disposé orientable au niveau du bras supérieur (9) et **en ce que**, dans la zone des zones d'accès transversales au guide du chariot (4) à la machine de traitement (1), l'enceinte de protection (18) présente un capot (21) recouvrant la zone d'accès face au chariot (3).

2. Installation de traitement selon la revendication 1, **caractérisée en ce que** le palier articulé (6) pour le bras (7) du dispositif de chargement (2) est logé tournant autour d'un axe vertical dans le chariot (3).

3. Installation de traitement selon la revendication 1 ou 2, **caractérisée en ce que** l'unité de manipulation (12) articulée au niveau du bras inférieur (11) présente un guide parallèle à partir de deux quadrilatères articulés (15, 16) reliés du point de vue de l'entraînement, ensemble, avec le bras supérieur et le bras inférieur (9, 11), en tant que bielle.

4. Installation de traitement selon l'une des revendications 1 à 3, **caractérisée en ce que** le dispositif de chargement (2) est affecté au moins à deux machines de traitement prévues dans une enceinte de protection (18) commune.
